# EUROPÄISCHE PATENTANMELDUNG

(11) **EP 3 971 764 A1**
(43) Veröffentlichungstag der Anmeldung: **23.03.2022**
(21) Anmeldenummer: 20196726.2
(22) Anmeldetag: 17.09.2020
(51) Int. Cl.: G06K 7/10

(54) **VERFAHREN ZUR ERFASSUNG VON DATEN VON RFID-TRANSPONDERN IN EINER RFID-ANORDNUNG MIT EINER VIELZAHL VON SCHREIB-/LESEGERÄTEN**

(71) Anmelder: Siemens Aktiengesellschaft, 80333 München (DE)
(72) Erfinder: Häuser, Markus, 90475 Nürnberg (DE)

(57) **Zusammenfassung**

Die Erfindung betrifft ein Verfahren zur Erfassung von Daten von RFID-Transpondern in einer RFID-Anordnung mit einer Vielzahl von Schreib-/Lesegeräten, wobei eine Vielzahl von Objekten jeweils mit mindestens einem Transponder versehen ist, und jeder Transponder über eine Luftschnittstelle mit zumindest einem Schreib-/Lesegerät Daten austauschen kann.

Das Verfahren ist dadurch gekennzeichnet, dass ermittelt wird, welche Objekte in der Vergangenheit bereits von mindestens einem ersten Schreib-/Lesegerät der RFID-Anordnung erfasst wurden und welches Objekt zu einem nächsten Zeitpunkt bei einem zuvor bestimmten Schreib-/Lesegerät erfasst werden soll. Daraufhin werden relevante Daten dieses Objektes und die Konfigurationsdaten des ersten Schreib-/Lesegerätes dem zuvor bestimmten Schreib-/Lesegerät übermittelt und die Konfiguration dieses Schreib-/Lesegerätes wird gemäß den zuvor übermittelten Daten des Objektes angepasst, bevor das Objekt bei dem Schreib-/Lesegerät erfasst wird. Auf diese Weise kann die Lesesicherheit eines Schreib-/Lesegeräts signifikant erhöht werden, weil eine Optimierung der Konfiguration des Geräts bereits vor Eintritt des Lese-Ereignisses erfolgt.

## Beschreibung

Die Erfindung betrifft ein Verfahren zur Erfassung von Daten von RFID-Transpondern in einer RFID-Anordnung mit einer Vielzahl von Schreib-/Lesegeräten. Die Erfindung betrifft ferner ein für das Verfahren geeignetes Schreib-/Lesegerät und ein entsprechendes Computerprogramm und Computerprogrammprodukt.

**R**adio **F**requency **ID**entification (engl. für Funkfrequenz-Identifizierung) ist eine Methode, mit der Daten berührungslos und ohne Sichtkontakt gelesen und gespeichert werden können. RFID-Systeme eignen sich grundsätzlich zur eindeutigen Identifizierung, zur automatischen Kennzeichnung, Erkennung und Registrierung von beliebigen Objekten (Waren, Güter, Kartons, Paletten, Produktionsteile, Fahrzeugen usw.) und Lebewesen in vielfältigen Bereichen wie der Lagerung von Gütern, Überwachung, Logistik, im Transportbereich, der Produktion, Fertigung, der Prozessindustrie aber auch in der Lebensmittelindustrie.

Ein RFID-System besteht grundsätzlich aus mindestens zwei Hauptkomponenten, einem RFID-Schreib-/Lesegerät und einem RFID-Datenträger. Der RFID-Datenträger wird meist unter dem Begriff Transponder, aber auch Tag, Label, Etikett oder Funkchip verwendet.

Ein RFID-Transponder besteht aus einem Mikrochip, welcher mit einer Antenne (Spule oder Dipol) verbunden ist. Die relevanten Daten eines Objektes werden auf dem Mikrochip (umfassend einen analogen Schaltkreis zum Senden und Empfangen von Daten, einen Microcontroller und Speicher) gespeichert und mittels elektromagnetischer Wellen (elektronisches Kopplungsverfahren per Modulation) oder durch induktive Kopplung zu einem Lesegerät übertragen. Ein RFID-Schreib-/Lesegerät besteht je nach eingesetzter Technologie aus einer Lese- bzw. einer Schreib-/ Leseeinheit mit einer oder mehreren im Gerät integrierten oder externen Antennen. Die Einheit liest somit über eine Antenne Daten vom Transponder aus und weist diesen gegebenenfalls an, weitere Daten zu speichern. Darüber hinaus kontrolliert das Schreib-/Lesegerät die Qualität der Datenübermittlung und kann auch für die Energieversorgung der Transponder zuständig sein (beim Einsatz passiver Transponder). Die Lesegeräte sind typischerweise neben der Luftschnittstelle mit mindestens einer zusätzlichen Schnittstelle ausgestattet, um die empfangenen Daten an ein anderes System (z. B. PC, Automatensteuerung oder Authentifikationssystem) weiterzuleiten und dort zu verarbeiten. Über gängige Standard-Kommunikationsverfahren und Protokolle (Ethernet IP / TCP / XML / OPC UA, Profinet- und Profibus) können die Schreib-/Lesegeräte in die vorhandenen Kommunikationsstrukturen eingebunden werden.

RFID-Systeme arbeiten in verschiedenen Frequenzbereichen und Reichweiten. Für den kommerziellen Einsatz werden hauptsächlich Frequenzbereiche unter 135 kHz (Low Frequenz, LF), 13,56 MHz (High Frequenz, HF) und 869 bzw. 915 MHz (Ultra High Frequenz, UHF) belegt. RFID-Chips im UHF-Bereich werden vor allem in industriellen Anwendungen, der Logistik zur Steuerung von Logistikströmen, zum Beispiel in den Bereichen des Behältermanagements und der Palettenidentifikation eingesetzt. Sie besitzen eine hohe Reichweite zwischen 8 bis 12 m und eine Datenübertragungsrate von ca. 300 kbit/s.

In vielen RFID UHF Anwendungen werden sehr unterschiedliche Objekte mit Transpondern ausgestattet, um diese zu identifizieren. Ein Beispiel hierfür ist die Linienfertigung von Autos. So werden Funketiketten beispielsweise als Einweg-Transponder in den Radkasten des künftigen Autos montiert, und begleiten die Karosse auf allen Produktionsschritten vom Rohbau über die Lackierung bis in die Endmontage. In solchen Fertigungsstraßen werden häufig unterschiedliche Fahrzeugtypen mit Karosserien unterschiedlichster Formen gefertigt, was zu Problemen beim Auslesen der Transponder führen kann. Die Konfiguration eines Lesegeräts, welches für einen Fahrzeugtyp geeignet ist, kann bei einem anderen Fahrzeugtyp, welcher z.B. aus einem anderen Metall besteht, zu Problemen führen, da z.B. die Form oder das Metall zu Abschottungen der Funkwellen führen kann.

Wann immer unterschiedlichste mit Transpondern versehene Objekte mit unterschiedlichen Reader-Konfigurationen ausgelesen werden, kann es zu Fehlern und Störungen bei der Funkübertragung kommen. Ferner können die Transponder große Unterschiede in der Herstellqualität aufweisen, wenn sie z.B. aus unterschiedlichen Chargen stammen. Eine sichere Erfassung der zu identifizierenden Information kann unter solch variablen Umständen nicht gewährleistet werden.

Zusätzlich kann im Lebenszyklus der Transponder die Leistungsfähigkeit schlechter werden, indem sich die Ansprechleistung der Transponder verringert. In einem solchen Fall muss der Transponder frühzeitig ausgetauscht werden, was zu erhöhten Kosten führt. Alternativ kann die Konfiguration der Lesegeräte an die verschlechterten Randbedingungen angepasst werden, was ebenso kostspielig sowie aufwändig ist.

Um stark unterschiedliche Objekte zu erkennen, müssen aktuell entweder mehrere Konfigurationen in ein Lesegerät geladen werden oder mehrere Geräte verwendet werden. Wann, welche Konfiguration geladen wird, wird meistens durch "Probieren" oder alternativ durch Vorgabe eines übergeordneten Systems, wie eines Leitsystems oder einer Prozesssteuerung erfolgen. Das Laden der Konfiguration erfordert viel Zeit, welche häufig beim Betrieb einer Fertigungsanlage nicht vorhanden ist. Häufig werden sogar eingeschränkte Leistungscharakteristiken, die sich durch ein unoptimiertes Zusammenspiel aus Transpondern und Lesegeräten ergeben, akzeptiert, da eine Optimierung zu kostenintensiv und zeitaufwändig ist.

Es besteht daher der Bedarf, ein Verfahren oder System zu haben, welches die Nachteile des Standes der Technik überwindet und eine verbesserte, vor allem fehlersichere Erfassung der Transponder-Information gewährleistet, geschwindigkeitsoptimiert ist, und weniger Aufwand bedeutet.

Der Erfindung liegt daher die Aufgabe zugrunde, ein verbessertes Verfahren zur Erfassung von Daten von RFID-Transpondern in einer RFID-Anordnung mit einer Vielzahl von Schreib-/Lesegeräten anzugeben, welches die Erfassungssicherheit von verschiedenen Transpondern signifikant erhöht. Es ist ferner die Aufgabe der vorliegenden Erfindung ein dafür geeignetes Schreib-/Lesegerät anzugeben.

Diese Aufgabe wird hinsichtlich der Verfahrensaspekte durch die Merkmale des unabhängigen Patentanspruchs 1 gelöst. Die Aufgabe wird außerdem durch ein Schreib-/Lesegerät gemäß dem Patentanspruch 10 gelöst.

Es ist eine Kernidee der Lösung der Aufgabe, bei der Erkennung und Erfassung von Daten von einer Vielzahl unterschiedlicher RFID-Transpondern in einer RFID-Anordnung historische Lese-Ergebnisse von Schreib-/Lesegeräten zur Erhöhung der Lesesicherheit zu berücksichtigen.

Die Lösung der Aufgabe sieht insbesondere den Einsatz eines Verfahrens zur Erfassung von Daten von RFID-Transpondern in einer RFID-Anordnung mit einer Vielzahl von Schreib-/Lesegeräten vor, wobei eine Vielzahl von Objekten jeweils mit mindestens einem Transponder versehen ist, und jeder Transponder über eine Luftschnittstelle mit zumindest einem Schreib-/Lesegerät Daten austauschen kann. Das Verfahren ist dadurch gekennzeichnet, dass ermittelt wird, welche Objekte in der Vergangenheit bereits von mindestens einem ersten Schreib-/Lesegerät der RFID-Anordnung erfasst wurden und welches Objekt zu einem nächsten Zeitpunkt bei einem zuvor bestimmten Schreib-/Lesegerät erfasst werden soll. Daraufhin werden relevante Daten dieses Objektes und die Konfigurationsdaten des ersten Schreib-/Lesegerätes dem zuvor bestimmten Schreib-/Lesegerät übermittelt und die Konfiguration dieses Schreib-/Lesegerätes wird gemäß den zuvor übermittelten Daten des Objektes angepasst, bevor das Objekt bei dem Schreib-/Lesegerät erfasst wird.

Auf diese Weise kann die Lesesicherheit signifikant erhöht werden, weil eine Optimierung der Konfiguration eines Schreib-/Lesegeräts bereits vor Eintritt des Lese-Ereignisses oder Erfassungsereignisses erfolgt. Eine Verbesserung der Erfassung von Transponderdaten verbessert das Betriebsverhalten der gesamten RFID-Anordnung und steigert die Effizienz des mittels der Anordnung durchgeführten Prozesses.

Vorteile und Ausgestaltungen der Erfindung, die einzeln oder in Kombination miteinander einsetzbar sind, sind Gegenstand der Unteransprüche.

Die Ermittlung, welche Objekte in der Vergangenheit bereits von mindestens einem Schreib-/Lesegerät der RFID-Anordnung erfasst wurden, kann sowohl zentral in einem übergeordneten System oder einem zentralen Steuerungsmodul als auch dezentral in einem Schreib-/Lesegerät, welches als Master-Gerät fungiert oder als Edge-Device in einer IoT-Umgebung, erfolgen.

In einer vorteilhaften Ausführung werden dazu sämtliche Kommunikationsschnittstellen der Schreib-/Lesegeräte ausgelesen und die Daten der Schreib-/Lesegeräte gesammelt. In der Regel verfügt jedes Schreib-/Lesegerät neben der "Luftschnittstelle" zum Erfassen der Transponderdaten über mindestens eine weitere Systemschnittstelle zu einem Host-Computer, bei dem es sich um eine speicherprogrammierbare Steuerung, einen Personal-Computer oder ein sonstiges übergeordnetes System wie ein Leitsystem handeln kann. Die relevanten Daten aller Objekte, wie deren Identifikationsnummern, Objekteigenschaften wie Materialien oder Form können auf diese Weise genauso erfasst werden wie Betriebs- und Konfigurationsdaten der Schreib-/Lesegeräte. Bei den Betriebs- und Konfigurationsdaten kann es sich beispielsweise um die bei der Erfassung eines Objektes gemessenen Funk-Parameter, insbesondere die Empfangsfeldstärke RSSI (= Received Signal Strength Indicator), oder die Leserate handeln. Die Datenübertragung kann dabei über beliebige industrielle Kommunikationsnetze entweder kabelgebunden oder per Funk erfolgen.

Werden auf diese Weise die relevanten Daten aller Objekte und Reader gesammelt, kann vorteilhaft anhand dieser Daten ein Ist-Zustand der RFID-Anordnung erstellt werden, welcher mindestens dadurch charakterisiert ist, welche Objekte in der Vergangenheit bereits von mindestens einem Schreib-/Lesegerät der RFID-Anordnung erfasst wurden. Es wäre auch denkbar, z.B. manuell Erfassungslisten für den Start vorzugeben, damit in einem bestehenden System nicht alle Objekte erst eingelernt werden müssen. Eine Software kann diesen Ist-Zustand auswerten. Der gesamte Bestand an Objekten in einer Anlage und die mit den Objekten in Zusammenhang stehenden Daten der bereits erfolgten Lese-Ereignisse sind somit bekannt, was den Vorteil bietet, dass zukünftige Einstellungen der Schreib-/Lesegeräte auf Grundlage einer umfassenden Datenbasis vorgenommen werden können. Beispielsweise können auf dieser Datenbasis und der bereits erfolgten Lesungen errechnen, wie wahrscheinlich es ist, dass ein Objekt, das man erkennen möchte, ins Feld kommt.

In einer besonders vorteilhaften Ausführungsvariante werden pro Schreib/Lesegerät Erfassungslisten geführt, in denen für jedes Objekt Datensätze abgelegt sind, welche Betriebs- und Konfigurationsdaten des Schreib/Lesegeräts zum Auslesen des Transponders des Objektes umfassen und/oder welche die auf dem Transponder des Objektes gespeicherten Daten umfassen. Erfassungslisten bündeln die Informationen darüber, welche Objekte mit welchen Betriebs- und Konfigurationsdaten auf dem zugehörigen Schreib/Lesegerät erfasst wurden, was neben einem besseren Überblick, den Vorteil bietet, dass die Daten schneller und einfacher weiterverarbeitet werden können.

In einer besonders vorteilhaften Ausführungsvariante erstellt ein erstes Schreib-/Lesegerät eine Erkennungsreihenfolge der Objekte oder der wahrscheinlichsten Objekte, legt diese zusammen mit den Daten der Objekte in einer Erfassungsliste ab und übermittelt diese an ein zweites Schreib/Lesegerät. Die Konfiguration des zweiten Schreib-/Lesegerätes wird gemäß der zuvor übermittelten Erfassungsliste angepasst, bevor das Objekt bei dem zweiten Schreib-/Lesegerät erfasst wird. So weiß das in der Verarbeitungsreihenfolge nächste Schreib-/Lesegerät nicht nur, welcher Objekttyp wahrscheinlich als nächstes ins Feld kommt, sondern zusätzlich können noch vorteilhaft die optimalen Betriebsparameter eingestellt werden. Häufig sind in einer Art Programm ein Konfigurationsset mit gerätespezifischen Parametern auf dem Gerät gespeichert. Diese "Programme" können von der Erfassungsliste aufgerufen werden.

In einer weiteren vorteilhaften Ausführungsvariante wird bei der Konfiguration des zweiten Schreib-/Lesegerätes die von einem ersten der Schreib-/Lesegeräte erfasste Empfangsqualität bei der Anpassung zumindest eines Betriebsparameters verwendet. Auf diese Weise wird das Problem der sich hinsichtlich der Empfangsqualität verschlechternden Transponder gelöst. Bei einigen Schreib-/Lesegeräten wird die Sendeleistung des Schreib-/Lesegerätes schrittweise erhöht, bis ein oder mehrere Transponder erkannt werden. Wenn nun das vorherige (erste) Schreib-/Lesegerät bereits eine erhöhte Leistung benötigt hat, um einen Transponder zu erkennen, kann es diese Informationen gemäß dieser Ausführungsvariante direkt an das nächste (zweite) Schreib-/Lesegerät senden, sodass dieses die Erkennung gleich mit der erhöhten Sendeleistung startet. Falls hierbei erkannt wird, dass die Sendeleistung permanent erhöht werden muss, kann dies automatisch in dem gespeicherten Programm, also den Konfigurationsdaten, im Schreib-/Lesegerät erfolgen. Auch diese Information kann an das nächste Schreib-/Lesegerät gesendet werden. Das nachfolgende Schreib-/Lesegerät entscheidet dann, ob eine weitere Erhöhung der Sendeleistung möglich und sinnvoll ist. Manuelle Eingriffe können gemäß dieser Ausführung deutlich reduziert werden, was eine Effizienzsteigerung des Prozesses zur Folge hat.

In einer weiteren vorteilhaften Ausgestaltung der Erfindung meldet bei einer signifikanten Verschlechterung der Empfangsqualität das zweite Schreib-/Lesegerät die mangelnde Qualität des Transponders einem übergeordneten System. Der Transponder kann dann ausgetauscht werden. Eine vorbeugende Wartung kann somit vorteilhaft durchgeführt werden, was letztendlich ebenso die Lesesicherheit deutlich erhöht.

In einer weiteren vorteilhaften Ausgestaltung der Erfindung wird im Falle eines fehlenden Objektes, die Erkennungsreihenfolge angepasst und eine korrigierte Erfassungsliste an das nächste Schreib-/Lesegerät übermittelt. Sollte beispielsweise ein Objekt aus einer Fertigungsanlage entfernt worden sein, wird ein Schreib-/Lesegerät sämtliche Konfigurationen testen, um das Objekt zu erkennen. Gemäß dieser Ausführung existieren klare Vorgaben, wenn das Schreib-/Lesegerät ein Objekt nicht mehr findet. So wird die Anzahl an Umschaltungen bestmöglich verringert und die Wahrscheinlichkeit einer Lesung mit falschen Parametern annähernd ausgeschlossen.

In einer weiteren vorteilhaften Ausführungsvariante erfolgt zwischen den Schreib-/Lesegeräten ein Austausch von Betriebs- und Konfigurationsdaten bezogen auf die Erfassung der Objekte. Auch eine gleichberechtigte Abstimmung der Erfassungslisten der verschiedenen Schreib-/Lesegeräte untereinander bezüglich ihrer Plausibilität ähnlich eines Peer-to-Peer-Netzwerks ist denkbar. Die Konfiguration jedes einzelnen Schreib-/Lesegeräts wird somit erleichtert und verbessert. Eine Einstellung der richtigen Betriebsparameter vor Eintreffen des Objektes ist ebenso möglich. Ein zusätzlicher Einsatzfall entsteht dort, wo ein vorhandenes Schreib-/Lesegerät gegen ein anderes ausgetauscht werden soll, beispielsweise zu Wartungszwecken. Auch hier kann eine manuelle Neu-Konfigurierung des neu eingesetzten Gerätes erheblich vereinfacht oder sogar ganz eingespart werden.

In einer besonders vorteilhaften Ausgestaltung der Erfindung übernimmt ein Schreib-/Lesegerät eine Masterfunktion. Es würde also ein sogenanntes Quality Gate für die anderen Geräte darstellen. Außerdem kann das Master-Schreib-/Lesegerät die Steuerfunktion übernehmen, sodass ggfs. ein übergeordnetes System, wie beispielsweise ein Leitsystem, nicht mehr benötigt wird. Das Master-Modell bietet den Vorteil einer einfach zu verwaltenden, zentralen Steuerung aller Abläufe durch den Master. Es werden nur erlaubte Kommunikationsbeziehungen aufgebaut und unberechtigter Informationsaustausch unterbunden. Die anderen Schreib-/Lesegeräte kommen mit weniger Intelligenz und geringerem Funktionsumfang aus, womit Kosten eingespart werden können.

Die Aufgabe wird außerdem durch ein Schreib-/Lesegerät gemäß dem Patentanspruch 10 gelöst. Durch ein solches Schreib-/Lesegerät können die Vorteile realisiert werden, die bereits im Zusammenhang mit dem erfindungsgemäßen Verfahren diskutiert wurden.

Das erfindungsgemäße Verfahren wird bevorzugt in Software (als Applikationssoftware) oder in einer Kombination aus Soft-/Hardware implementiert, so dass die Erfindung auch ein Computerprogramm mit durch einen Computer ausführbaren Programmcodeanweisungen zur Implementierung des Verfahrens betrifft. In diesem Zusammenhang betrifft die Erfindung auch ein Computerprogrammprodukt, insbesondere einen Datenträger oder ein Speichermedium oder eine speicherprogrammierbare Steuerung (SPS), mit einem durch einen Computer ausführbaren derartigen Computerprogramm. Ein solches Computerprogramm kann beispielsweise in einem Speicher eines Host-Computers der RFID-Anordnung vorgehalten oder in diesen geladen werden, so dass es automatisch durchgeführt wird, oder das Computerprogramm kann bei einer Cloud-basierten Lösung in einem Speicher eines Remote-Service-Rechners vorgehalten oder in diesen ladbar sein oder es kann in eine speicherprogrammierbare Steuerung (SPS) geladen werden.

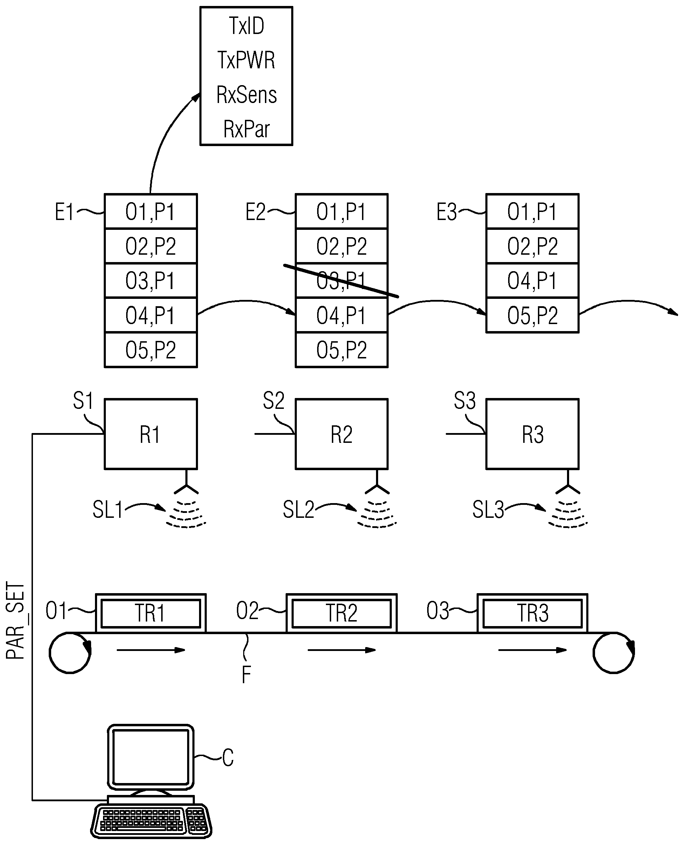

Im Folgenden wird die Erfindung anhand des in der Figur dargestellten Ausführungsbeispiels näher beschrieben und erläutert. Dabei zeigt die einzige

Figur in einer schematischen Darstellung eine RFID Anordnung aus drei Schreib-/Lesegeräten einer Linienfertigung und einem Administrierungs-Arbeitsplatz (Host-Computer)

In der Figur ist schematisch ein Ausführungsbeispiel für eine RFID-Anordnung einer Linienfertigung dargestellt. Die Erfindung ist jedoch nicht auf eine Linienfertigung beschränkt. Sie ist in beliebigen RFID-Anwendungen anwendbar.

In dem gezeigten Ausführungsbeispiel läuft eine Vielzahl von Objekten O1 bis Om (m ist eine natürliche Zahl) über ein Förderband F in Richtung des Produktionsflusses. Dargestellt sind exemplarisch Objekte O1 bis O3. Bei einer Linienfertigung handelt es sich um eine Reihenfertigung ohne Zeitzwang. Die aufeinander folgenden Fertigungsphasen sind kontinuierlich miteinander verbunden.

Bei den Objekten O1 bis Om kann es sich beispielsweise um Paletten handeln, auf denen ein Produktionsteil montiert ist. Auf den Produktionsteilen sind an einer Stelle Transponder angebracht. Denkbar ist auch, dass sowohl auf der Palette, als auch auf dem Produktionsteil, Transponder befestigt sind. Der Einfachheit wegen umfasst in diesem Ausführungsbeispiel jedes Objekt Oi einen RFID-Transponder TRi (i = natürliche Zahl zwischen 1 und m).

Ferner sind in der Figur stellvertretend für die gesamte Linienfertigung drei Schreib-/Lesegeräte R1, R2 und R3 dargestellt. In der Regel umfasst eine für eine Fertigung oder einen Produktionsprozess geeignete RFID-Anordnung eine Vielzahl von Schreib-/Lesegeräten. Die Schreib-/Lesegeräte R1, R2 und R3 verfügen mindestens über zwei Kommunikationsschnittstellen, nämlich zum einen eine Systemschnittstelle (hier S1, S2, und S3), welche zu einem hier nicht dargestellten Kommunikationsnetzwerk führen, und eine "Luftschnittstelle" ("Air Interface") SL1, SL2 und SL3 zur Kommunikation mit den RFID-Transpondern TR1, TR2 und TR3. Dabei werden entsprechende Nutzdaten (Payload, ND) ausgetauscht. Zur Konfiguration der Schreib-/Lesegeräte ist es üblich, diese über eine der Systemschnittstellen (hier S1 für R1) mit einem Programmiergerät, einem Rechner C oder dgl. zu verbinden. In dem häufigen Anwendungsfall, bei dem die Systemschnittstellen der Schreib-/Lesegeräte an einem (ggf. industriellen) Datennetz angeschlossen sind, kann an demselben Datennetz ein Programmiergerät oder ein Rechner C angeschlossen sein, welcher wechselweise oder sogar gleichzeitig auf die Betriebsparameter (Parameter-Sätze oder Konfigurations-Datei PAR SET) zugreift und einem Benutzer gestattet, die Werte der Betriebsparameter wunschgemäß einzustellen. Bei dem Rechner C kann es sich auch um einen Server eines Leitsystems, also einer übergeordneten Steuerungseinheit, oder um einen Remote-Server oder eine speicherprogrammierbare Steuerung (SPS) handeln.

Das erfindungsgemäße Verfahren erlaubt es nun, möglichst genau vorauszusagen, welches Objekt als nächstes ins Feld kommen wird. Gemäß einer Ausführungsvariante wird auf der Basis des gesamten Bestands an Objekten in einer Anlage und anhand der bereits erfolgten Lesungen beispielsweise errechnet, wie wahrscheinlich es ist, dass ein Objekt Ox, das erkannt werden soll, ins Feld kommt. Auf der Basis dieser Berechnungen werden anschließend relevante Daten wie die Nutzdaten ND (ID des Objektes und weitere Daten) dieses Objektes Ox und Konfigurationsdaten KD des vorherigen ersten Schreib-/Lesegerätes dem zuvor bestimmten und nun aktuellen Schreib-/Lesegerät Rx übermittelt und die Konfiguration dieses Schreib-/Lesegerätes Rx wird gemäß den zuvor übermittelten Daten angepasst, bevor das Objekt Ox bei dem Schreib-/Lesegerät Rx erfasst wird. Bei den übermittelten Daten kann es sich sowohl um Nutzdaten ND, als auch um Konfigurationsdaten KD handeln.

In dem in der Figur dargestellten Ausführungsbeispiel fungiert das erste Schreib-/Lesegerät R1 als Master oder "Quality Gate". Diese "Master"-Funktion kann in einer anderen Ausführung auch ein anderes der Schreib-/Lesegeräte übernehmen; Alternativ wäre auch eine temporäre Master-Funktionalität denkbar. Darüber hinaus sind Hierarchien oder Algorithmen denkbar, die ein "Aushandeln" der Master-Funktionalität gestatten. Das erste Schreib-/Lesegerät erstellt eine Erkennungsreihenfolge der Objekte und legt diese zusammen mit den Daten der Objekte in einer Erfassungsliste E1 ab. In dieser ist vermerkt, dass das Objekt O1 zuerst erkannt wurde und das Programm P1 als Konfiguration des Schreib-/Lesegerätes verwendet wurde. Bei dem Programm P1 kann es sich um ein Konfigurationsdatenset handeln. Das Konfigurationsdatenset P1 umfasst in der Regel Betriebsparameter des Schreib-/Lesegerätes, die bereits vor einer neuen Lesung angepasst werden können. Als anzupassende Betriebsparameter kommen beispielsweise eine maximale oder eine derzeit (zukünftig) zu verwendende Sendeleistung, ein zu verwendender oder ein zu sperrender Funkkanal, eine zu verwendende Eingangsempfindlichkeit der Empfangselektronik oder auch Zeitparameter in Frage. Weitere Betriebsparameter können das zu verwendende Kommunikationsprotokoll näher spezifizieren, was sowohl das für den operativen Betrieb verwendete Protokoll zum Lesen und Schreiben der RFID-Transponder betrifft, als auch das zur Kommunikation mit anderen Schreib-/Lesegeräten zu verwendende RFID-Kommunikationsprotokoll.

In der Erfassungsliste E1 sind - wie in der Figur gezeigt - für beispielhaft 5 Objekte O1 bis O5 Datensätze P1 und P2 abgelegt, welche Betriebs- und Konfigurationsdaten des Schreib/Lesegeräts R1 zum Auslesen des Transponders der jeweiligen Objekte umfassen und/oder welche die auf dem Transponder des Objektes gespeicherten Daten umfassen. Das Programm P1 enthält mindestens Daten wie die auf dem RFID-Transponder gespeicherte Identifikationsnummer TxID, oder die zum Auslesen des Transponders Tx benötigte Sendeleistung TxPWR, die Empfindlichkeit des Schreib-/Lesegerätes RxSens oder sonstige Parameter des Schreib-/Lesegerätes RxPar.

Nach Übertragung der Erfassungsliste E1 zum zweiten Schreib-/Lesegerät R2, stellt dieses fest, dass die Daten des Objektes O3 fehlen. Das Schreib-/Lesegerät sollte trotzdem beide Programme testen können. Allerdings wird die Wahrscheinlichkeit einer Lesung mit falschen Parametern verringert. Wenn das Schreib-/Lesegerät nun ein Objekt nicht mehr findet, ändert es die Erkennungsreihenfolge ab und schickt sie wieder an seinen Nachfolger. Das Schreib-/Lesegerät R3 arbeitet nun mit der veränderten Erfassungsliste E3 weiter.

## Patentansprüche

1. Verfahren zur Erfassung/Erkennung von Daten von RFID-Transpondern (TR1, ..., TRn) in einer RFID-Anordnung mit einer Vielzahl von Schreib-/Lesegeräten (R1, R2, R3, ...),
wobei eine Vielzahl von Objekten (O1, ..., Om) jeweils mit mindestens einem Transponder (TR1) versehen sind, und jeder Transponder über eine Luftschnittstelle mit zumindest einem Schreib-/Lesegerät Daten (ND) austauschen kann,
**dadurch gekennzeichnet,**
**dass** ermittelt wird, welche Objekte in der Vergangenheit bereits von mindestens einem ersten Schreib-/Lesegerät (R1) der RFID-Anordnung erfasst wurden,
**dass** ermittelt wird, welches Objekt (Ox) zu einem nächsten Zeitpunkt bei einem zuvor bestimmten Schreib-/Lesegerät (Rx) erfasst werden soll,
**dass** relevante Daten (ND) dieses Objektes (Ox) und die Konfigurationsdaten (KD) des ersten Schreib-/Lesegerätes (R1) dem zuvor bestimmten Schreib-/Lesegerät (Rx) übermittelt werden, und dass die Konfiguration dieses Schreib-/Lesegerätes (Rx) gemäß den zuvor übermittelten Daten (ND, KD) des Objektes (Ox) angepasst wird, bevor das Objekt (Ox) bei dem Schreib-/Lesegerät (Rx) erfasst wird.

2. Verfahren nach Anspruch 1,
**dadurch gekennzeichnet,**
**dass** relevante Daten aller Objekte (O1, ..., Om) und Betriebs- und Konfigurationsdaten der Schreib-/Lesegeräte gesammelt werden, dass anhand dieser Daten ein Ist-Zustand der RFID-Anordnung erstellt wird, welcher mindestens dadurch charakterisiert ist, welche Objekte in der Vergangenheit bereits von mindestens einem Schreib-/Lesegerät (R1, R2, R3, ...) der RFID-Anordnung erfasst wurden.

3. Verfahren nach Anspruch 1 oder 2,
**dadurch gekennzeichnet,**
**dass** pro Schreib/Lesegerät Erfassungslisten geführt werden, in denen für jedes Objekt Datensätze abgelegt sind, welche Betriebs- und Konfigurationsdaten des Schreib/Lesegeräts zum Auslesen des Transponders des Objektes umfassen und/oder welche die auf dem Transponder des Objektes gespeicherten Daten umfassen.

4. Verfahren nach Anspruch 3,
**dadurch gekennzeichnet,**
**dass** das erste Schreib-/Lesegerät (R1) eine Erkennungsreihenfolge der Objekte erstellt und diese zusammen mit den Daten der Objekte in einer Erfassungsliste ablegt und diese an ein zweites Schreib/Lesegerät (Rx) übermittelt, und dass die Konfiguration des zweiten Schreib-/Lesegerätes (Rx) gemäß der zuvor übermittelten Erfassungsliste angepasst wird, bevor das Objekt (Ox) bei dem zweiten Schreib-/Lesegerät (Rx) erfasst wird.

5. Verfahren nach Anspruch 4,
**dadurch gekennzeichnet,**
**dass** bei der Konfiguration des zweiten Schreib-/Lesegerätes (Rx) die von dem ersten der Schreib-/Lesegeräte (R1, R2, R3, R4) erfasste Empfangsqualität bei der Anpassung zumindest eines Betriebsparameters verwendet wird.

6. Verfahren nach Anspruch 5,
**dadurch gekennzeichnet,**
**dass** bei einer signifikanten Verschlechterung der Empfangsqualität das zweite Schreib-/Lesegerät (Rx) die mangelnde Qualität des Transponders einem übergeordneten System meldet.

7. Verfahren nach einem der Ansprüche 3 bis 6
**dadurch gekennzeichnet,**
**dass** im Falle eines fehlenden Objektes, die Erkennungsreihenfolge angepasst wird und eine korrigierte Erfassungsliste an das nächste Schreib-/Lesegerät übermittelt wird.

8. Verfahren nach einem der vorhergehenden Patentansprüche,
**dadurch gekennzeichnet,**
**dass** zwischen den Schreib-/Lesegeräten (R1, R2, R3, ...) ein Austausch von Betriebs- und Konfigurationsdaten bezogen auf die Erfassung der Objekte erfolgt.

9. Verfahren nach einem der vorhergehenden Patentansprüche,
**dadurch gekennzeichnet,**
**dass** innerhalb der RFID-Anordnung ein Schreib-/Lesegerät (R1, R2, R3, ...) als Master fungiert.

10. Schreib-/Lesegerät für eine RFID-Anordnung mit einer Vielzahl von Schreib-/Lesegeräten (R1, R2, R3, ...), zur Erfassung einer Vielzahl von Objekten (O1, ..., Om) mit mindestens einem Transponder (TR1), wobei jeder Transponder ausgebildet ist, über eine Luftschnittstelle mit zumindest einem Schreib-/Lesegerät Daten (ND) auszutauschen,
**dadurch gekennzeichnet,**
**dass** das Schreib-/Lesegerät (R1) dazu ausgebildet ist, zu ermitteln, welche Objekte in der Vergangenheit bereits von mindestens einem ersten der Schreib-/Lesegeräte (R1)) der RFID-Anordnung erfasst wurden, und welches Objekt (Ox) zu einem nächsten Zeitpunkt innerhalb der RFID-Anordnung bei einem zuvor bestimmten Schreib-/Lesegerät (Rx) erfasst werden soll, dass das Schreib-/Lesegerät (R1) ferner dazu ausgebildet ist, relevante Daten (ND) dieses Objektes (Ox) und die Konfigurationsdaten (KD) des ersten Schreib-/Lesegerätes (R1) dem zuvor bestimmten Schreib-/Lesegerät (Rx) zu übermitteln, und, und
**dass** die Konfiguration dieses Schreib-/Lesegerätes (Rx) gemäß den zuvor übermittelten Daten (ND, KD) des Objektes (Ox) angepasst wird, bevor das Objekt (Ox) bei dem Schreib-/Lesegerät (Rx) erfasst wird.

11. Schreib-/Lesegerät nach Anspruch 10,
**dadurch gekennzeichnet,**
**dass** es ferner dazu ausgebildet ist, die Verfahrensschritte gemäß einem der Ansprüche 2 bis 9 auszuführen.

12. Computerprogramm mit durch einen Computer ausführbaren Programmcodeanweisungen zur Implementierung des Verfahrens nach einem der Ansprüche 1 bis 9, wenn das Computerprogramm auf einem Computer ausgeführt wird.

13. Computerprogrammprodukt, insbesondere Datenträger oder Speichermedium mit einem durch einen Computer ausführbaren Computerprogramm gemäß Anspruch 12.
